# EUROPÄISCHE PATENTSCHRIFT

(11) **EP 3 869 133 B1**
(45) Veröffentlichungstag und Bekanntmachung des Hinweises auf die Patenterteilung: **19.07.2023**
(21) Anmeldenummer: 21158296.0
(22) Anmeldetag: 19.02.2021
(51) Int. Cl.: F25D 27/00, F21V 33/00, F21W 131/305, F21Y 113/13, F21Y 115/10, F21V 8/00

(54) **KÜHL- UND/ODER GEFRIERGERÄT MIT EINER SPEZIELLEN INNENRAUMBELEUCHTUNG**
REFRIGERATION AND/OR FREEZER DEVICE WITH A SPECIALISED INTERIOR LIGHTING
RÉFRIGÉRATEUR ET/OU CONGÉLATEUR POURVU D'UN ÉCLAIRAGE INTÉRIEUR SPÉCIAL

(30) Priorität: 21.02.2020 DE 102020104580; 25.03.2020 DE 102020108163
(43) Veröffentlichungstag der Anmeldung: 25.08.2021
(73) Patentinhaber: Liebherr-Hausgeräte Ochsenhausen GmbH, 88416 Ochsenhausen (DE)
(72) Erfinder: Schirmer, Marc, 88400 Biberach-Ringschnait (DE); Otto, Pascal, 88444 Ummendorf (DE)
(74) Vertreter: Herrmann, Uwe

(56) Entgegenhaltungen:
- EP-A1- 3 575 715
- WO-A1-2007/062918
- WO-A1-2013/105185
- WO-A1-2014/088298
- DE-A1-102008 009 862
- DE-A1-102010 027 582
- DE-A1-102011 054 761
- DE-A1-102011 075 206
- DE-A1-102018 118 546
- DE-U1-202004 020 492
- US-A1- 2017 314 848

## Beschreibung

Die Erfindung betrifft ein Kühl- und/oder Gefriergerät nach dem unabhängigen Anspruch 1 mit einer speziell ausgestalteten Innenraumbeleuchtung.

Für Kühl- und/oder Gefriergeräte sind unterschiedliche Innenraumbeleuchtungen bekannt geworden. Die Dokumente DE 10 2011 075206 A1, die DE 20 2004 020492 U1, die DE 10 2010 027582 A1, EP3575715 A1, WO2007/062918 A1, DE102011054761 A1, WO2013/105185 A1, WO2014/088298 A1, DE102008 009862 A1 und die US 2017/314848 A1 offenbaren Innenraumbeleuchtungen für Kühl- und/oder Gefriergeräte. Beispielsweise wird in der DE 10 2018 118 546 A1 ein Beleuchtungssystem offenbart, das zwei an den Seitenwänden des Geräteinnenraums hochkant angeordnete, rechteckige Beleuchtungsmodule aufweist, die an einer großen Lichtabgabefläche vollflächig Licht in den Innenraum abgeben. Die Beleuchtungsmodule umfassen auch eine Abdeckplatte mit Rippen, die als Auflagekonturen für Ablageböden des Geräts dienen.

Dieses Beleuchtungsmodul erlaubt jedoch keine individuelle Steuerung der Beleuchtung und kann entweder insgesamt aktiv oder inaktiv sein. Eine einzelne Beleuchtung von beispielsweise individuellen Ablageebenen des Innenraums ist nicht möglich.

Aufgabe der Erfindung ist es, eine gattungsgemäße Innenraumbeleuchtung für ein Kühl- und/oder Gefriergerät derart weiterzubilden, dass diese Nachteile überwunden werden.

Vor diesem Hintergrund betrifft die Erfindung ein Kühl- und/oder Gefriergerät nach dem Anspuch 1 mit einem wärmeisolierten Gerätekorpus, der einen Innenraum umschließt, mit einer Gerätetür, die eine Entnahmeöffnung reversibel verschließt, und mit einer Wärmepumpe zur Kühlung des Innenraums, wobei im Innenraum wenigstens ein Beleuchtungsmodul angeordnet ist, das eine Lichtabgabefläche aufweist, die sich über zumindest einen Teil einer Wand des Innenraums erstreckt.

Erfindungsgemäß ist vorgesehen, dass das Beleuchtungsmodul eine Segmentbeleuchtung aufweist, die ausgebildet ist, wahlweise an einem oder mehreren Teilsegmente der Lichtabgabefläche vollflächig oder punktuell Licht in den Innenraum abzugeben.

Wenn im Zusammenhang mit der Segmentbeleuchtung von einer vollflächigen Lichtabgabe die Rede ist, bezieht sich das auf die Fläche eines Teilsegments und nicht auf die gesamte Lichtabgabefläche des Beleuchtungsmoduls. Die Fläche des Teilsegments stellt einen Abschnitt der gesamten Lichtabgabefläche des Beleuchtungsmoduls dar.

Erfindungsgemäß ist vorgesehen, dass das Beleuchtungsmodul eine primäre Lichtleiterplatte mit primären Lichtquellen umfasst, die sich über vorzugsweise die gesamte Lichtabgabefläche erstreckt, unabhängig von der Segmentbeleuchtung betrieben werden kann und ausgebildet ist, in einem aktiven Zustand vollflächig Licht in den Innenraum abzugeben. Die primäre Lichtleiterplatte ist durchsichtig bzw. zumindest transluzent, sodass das Licht der Segmentbeleuchtung von vorne, also vom Geräteinnenraum her sichtbar ist. Die Segmentbeleuchtung durchleuchtet die primäre Lichtleiterplatte von hinten.

Die primäre Lichtleiterplatte kann insbesondere ausgebildet sein, weißes Licht in den Innenraum abzugeben.

Weiter vorzugsweise weist die Lichtabgabefläche eine längliche Gestalt auf und ist hochkant an der Wand angeordnet. Vorzugsweise hat die Lichtabgabefläche dabei eine rechteckige Gestalt.

Die Teilsegmente können sich in einer Ausführungsvariante über die gesamte Tiefe der Lichtabgabefläche erstrecken und übereinander angeordnet sein. Die Teilsegmente können direkt aneinander angrenzen und/oder sich in ihrer Gesamtheit über die gesamte Lichtabgabefläche erstrecken. Die Grenzlinien zwischen den Teilsegmenten verlaufen vorzugsweise horizontal.

In einer anderen Ausführungsform kann die Lichtabgabefläche auch quadratisch oder annähernd quadratisch sein.

Insbesondere kann die Lichtabgabefläche sich über eine Seitenwand des Innenraums erstrecken. Besonders bevorzugt ist, dass zwei identische bzw. spiegelverkehrte Beleuchtungsmodule mit Lichtabgabeflächen an den beiden gegenüberliegenden Seitenwänden des Innenraums angeordnet sind. Die vorliegende Beschreibung des einen Beleuchtungsmoduls gilt in der vorliegenden Ausführungsform der Erfindung individuell für beide Beleuchtungsmodule.

In einer anderen Ausführungsform kann die Lichtabgabefläche sich über die Rückwand des Innenraums erstrecken.

In einer Ausführungsform umfasst das Beleuchtungsmodul eine die Lichtabgabefläche überdeckende Abdeckplatte. Bei der Abdeckplatte handelt es sich vorzugsweise um eine Diffusorplatte, die das von der Lichtabgabefläche in den Innenraum abgegebene Licht streut und somit homogener macht.

Die Abdeckplatte kann mehrere übereinander angeordnete, von dem Beleuchtungsmodul abstehende horizontale Rippen aufweisen. Die Rippen können zu Befestigung von Ablageelementen wie beispielsweise Ablageböden oder Schubladen dienen. Sie befinden sich vorzugsweise auf Höhe der Grenzlinien zwischen den Teilsegmenten. Dies hat den Vorteil, dass die einzelnen Teilsegmente des Beleuchtungsmoduls auf Höhe der einzelnen Ablagebereiche des Innenraums angeordnet sind, wodurch eine individuelle Beleuchtung der einzelnen Ablagebereiche ermöglicht wird.

In einer Variante der Erfindung ist vorgesehen, dass die Segmentbeleuchtung eine oder mehrere sekundäre Lichtleiterplatten umfasst, die im Bereich der hinterleuchtbaren Teilsegmente hinter der primären Lichtleiterplatte angeordnet sind und die ausgebildet sind, in einem aktiven Zustand vollflächig Licht in den Innenraum abzugeben.

Diese Art der Segmentbeleuchtung eignet sich insbesondere dazu, wahlweise an einem oder mehreren Teilsegmente der Lichtabgabefläche vollflächig Licht in den Innenraum abzugeben.

Wie bei der primären Lichtleiterplatte kann es sich auch bei den sekundären Lichtleiterplatten in einer bevorzugten Variante um Lichtleiterplatten handeln, die mit Indirekt-Lichtquellen assoziiert sind, deren Licht seitlich in die Lichtleiterplatte eingekoppelt wird. Alternativ kann auch sie selbst als flächige Direkt-Lichtquelle ausgebildet sein, beispielsweise durch Beschichtung einer Glasplatte mit OLEDs.

Die sekundären Lichtleiterplatten können beispielsweise anhand einer Klebeverbindung direkt an die primäre Lichtleiterplatte assoziiert sein. Eine individuelle Montage innerhalb des Beleuchtungsmoduls kann in einer anderen Variante aber ebenfalls vorgesehen sein.

Vorzugsweise erstrecken sich die sekundären Lichtleiterplatten über die gesamten Flächen der jeweiligen Teilsegmente, wodurch in einer Ausführungsform vorgesehen sein kann, dass sich die sekundären Lichtleiterplatten über die gesamte Tiefe der Lichtabgabefläche erstrecken und übereinander angeordnet sind und/oder sich in ihrer Gesamtheit über die gesamte Lichtabgabefläche erstrecken.

Insbesondere kann vorgesehen sein, dass die sekundären Lichtleiterplatten direkt aneinander angrenzen, wobei vorzugsweise vorgesehen ist, dass die einander zugewandten Kanten der Lichtleiterplatten zumindest einseitig verspiegelt sind und/oder dass die Lichtleiterplatten unterschiedliche Brechungsindices aufweisen.

Durch diese Maßnahmen kann ein Lichtübertritt von einer sekundären Lichtleiterplatte zur nächsten sekundären Lichtleiterplatte, und somit ein Lichtübertritt von einem Teilsegment zum nächsten Teilsegment verhindert werden.

In einer weiteren Variante der Erfindung kann vorgesehen sein, dass die Segmentbeleuchtung eine oder mehrere diskrete Lichtquellen umfasst, die im Bereich des oder der hinterleuchtbaren Teilsegmente angeordnet sind. Diese Art der Segmentbeleuchtung eignet sich insbesondere dazu, wahlweise an einem oder mehreren Teilsegmente der Lichtabgabefläche punktuell Licht in den Innenraum abzugeben. Allerdings kann anhand einer Umlenkt- bzw. Streuoptik auch eine flächige Lichtabgabe über einen größeren Bereich oder die gesamte Fläche der Teilsegmente erreicht werden.

Die diskreten Lichtquellen sind hinter der primären Lichtleiterplatte und/oder der Abdeckplatte angeordnet und ausgebildet, diese direkt oder indirekt, beispielsweise durch Umlenkung des Lichts an einer Optik wie einem Parabolspiegel, von hinten zu durchleuchten.

In einer Variante der Erfindung ist vorgesehen, dass die Segmentbeleuchtung ausgebildet ist, farbiges Licht abzugeben und/oder die Farbe des ausgesandten Lichts verändern zu können und/oder an jedem der Teilsegmente Licht unterschiedlicher Farbe abzugeben.

So kann eine individuelle Gestaltung der Lichtabgabe erreicht werden, mit der einzelne Lagerzonen im Gerät nicht nur individuell, sondern auch farblich hervorgehoben bzw. abgestimmt beleuchtet werden können.

Bei den Indirekt-Lichtquellen und Direkt-Lichtquellen kann es sich generell um LED-Lichtquellen, beispielsweise RGB-, RGBW- oder RGBWW-LEDs, oder auch um Laserdioden handeln. Diese sind aufgrund ihrer hohen Lichtausbeute, ihrer hohen Lebensdauer, ihres geringen Strombedarfs und der geringen Wärmeemission generell bevorzugt.

In einer Ausführungsform ist vorgesehen, dass die Lichtabgabe an der Segmentbeleuchtung und/oder an der primären Lichtabgabefläche gedimmt werden kann. Weitere Einzelheiten und Vorteile der Erfindung ergeben sich aus den nachfolgend anhand der Figuren beschriebenen Ausführungsbeispielen. Alle Ausführungsbeispiele offenbaren alle technische Merkmale des unabhängigen Anspruchs 1.

In den Figuren zeigen
- Figuren 1a-1b:: einen Querschnitt durch und eine Draufsicht auf ein Beleuchtungsmodul in einer ersten Ausführungsform der Erfindung;
- Figuren 2a-2b:: einen Querschnitt durch und eine Draufsicht auf ein Beleuchtungsmodul in einer zweiten Ausführungsform der Erfindung;
- Figuren 3a-3b:: einen Querschnitt durch und eine Draufsicht auf ein Beleuchtungsmodul in einer dritten Ausführungsform der Erfindung.

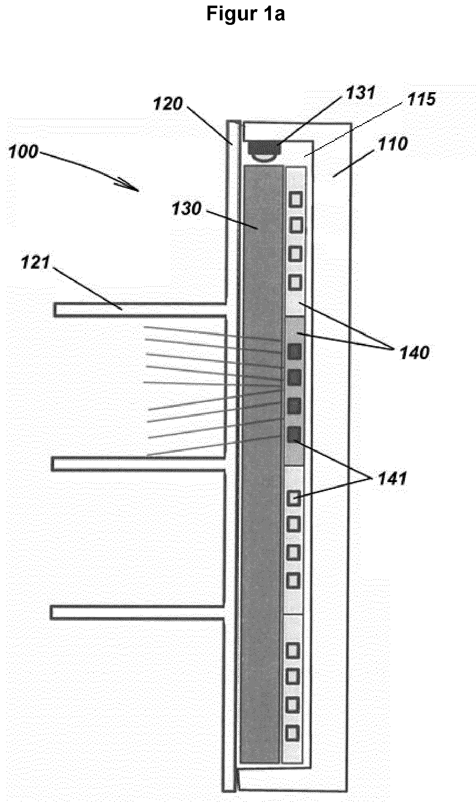

In Figuren 1a-1b ist ein Beleuchtungsmodul 100 in einer ersten Ausführungsform der vorliegenden Erfindung dargestellt.

Wie in der Querschnittsansicht der Figur 1a zu erkennen ist, umfasst das Beleuchtungsmodul 100 ein Halteteil 110 zur Befestigung an einer nicht dargestellten Wand eines Geräteinnenbehälters, eine Diffusorplatte 120 zur frontseitigen Abdeckung des Beleuchtungsmoduls 100 sowie einen im Halteteil 110 ausgebildeten und von der Diffusorplatte 120 überdeckten Bauraum 115 für die in der Folge noch näher beschriebenen Lichtabgabeeinheiten.

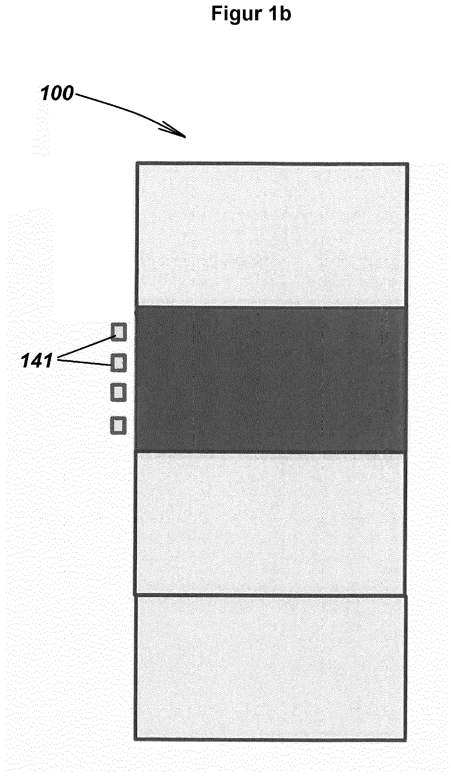

Das Beleuchtungsmodul 100 hat, wie in der Draufsicht der Figur 1b zu erkennen ist, die Gestalt eines länglichen Rechtecks. Es ist vorgesehen, diese in eine Seitenwand des Innenraums eines Kühl- und/oder Gefriergeräts zu integrieren. Insbesondere ist dabei vorgesehen, dass der Gerätekorpus einen Innenbehälter aus einer ausgeformten Kunststoffplatine umfasst und das Halteteil 110 formschlüssig in einer Tasche des Innenbehälters fixiert ist. Dies kann erreicht werden, indem Beleuchtungsmodul und die Tasche korrespondierende Rastelemente aufweisen. Vorzugsweise kommt die Verbindung ohne zusätzliche Halteteile wie etwa Schrauben oder Klammern aus. Eine weitere Möglichkeit der Montage ist, das Halteteil 110 als Einschäumteil hinter eine Stanzung des Innenbehälters zu legen.

Im Bauraum 115 ist direkt hinter der Diffusorplatte 120 eine primäre Lichtleiterplatte 130 verbaut, die sich über die gesamte Fläche des Beleuchtungsmoduls 100 erstreckt und hat mithin ebenfalls die Gestalt eines stehenden, länglichen Rechtecks. Es handelt sich bei der primären Lichtleiterplatte 130 um eine Glasplatte, die mit mehreren seitlich davon angeordneten primären LED-Lichtquellen 131 assoziiert ist, durch die Licht von der Seite in die primäre Lichtleiterplatte 130 eingekoppelt wird, das dann über die Fläche der primären Lichtleiterplatte 130 verteilt nach vorne abgegeben wird und durch die Diffusorplatte 120 hindurch in den Innenraum dringt. Die primären LED-Lichtquellen 131 geben weißes Licht ab, sodass auch die primäre Lichtleiterplatte 130 weißes Licht in den Innenraum leitet und weiß bzw. farblos erleuchtet erscheint.

Hinter der primären Lichtleiterplatte 130 befinden sich mehrere sekundäre Lichtleiterplatten 140, die in ihrer Gesamtheit eine Segmentbeleuchtung des Beleuchtungsmoduls 100 bilden. Bei jeder der sekundären Lichtleiterplatten 140 handelt es sich ebenfalls um eine Glasplatte, die mit mehreren seitlich davon angeordneten sekundären LED-Lichtquellen 141 assoziiert ist, durch die Licht von der Seite in die sekundären Lichtleiterplatten 140 eingekoppelt wird, das dann über die Flächen der sekundären Lichtleiterplatten 140 verteilt nach vorne abgegeben wird und durch sowohl die transluzente primäre Lichtleiterplatte 130 als auch die Diffusorplatte 120 hindurch in den Innenraum dringt.

Die sekundären Lichtleiterplatten 140 erstrecken sich über die gesamte Tiefe der primären Lichtleiterplatte 130 und mithin der Lichtabgabefläche des Beleuchtungsmoduls 100. Sie sind übereinander angeordnet und grenzen direkt aneinander an, wobei die aneinandergrenzenden Kanten verspiegelt sind, sodass kein Lichtübertritt von einer sekundären Lichtleiterplatte 140 in die benachbarte sekundäre Lichtleiterplatte 140 stattfinden kann. In ihrer Gesamtheit erstrecken sich die mehreren sekundären Lichtleiterplatten 140 über die gesamte Fläche der primären Lichtleiterplatte 130 und mithin die gesamte Lichtabgabefläche des Beleuchtungsmoduls 100.

Die sekundären LED-Lichtquellen 141 können unabhängig von den primären LED-Lichtquellen 131 und auch je sekundärer Lichtleiterplatte 140 unabhängig voneinander betrieben werden. Sie geben farbiges oder weißes Licht ab, sodass die sekundären Lichtleiterplatten 140 farbiges oder weißes Licht in den Innenraum leiten und die entsprechenden Teilsegmente des Beleuchtungsmoduls 100 entsprechend farbig oder weiß erleuchtet erscheinen.

Die Diffusorplatte 120 weist an ihrer Vorderseite mehrere übereinander angeordnete, von dem Beleuchtungsmodul 100 abstehende horizontale Rippen 121 auf. Die Rippen 121 dienen im Innenraum des Kühlgeräts als Auflagekonturen zur seitlichen Befestigung von Ablageelementen wie beispielsweise Ablageböden oder Schubladen.

Sie befinden sich genau auf Höhe der Übergänge zwischen den sekundären Lichtleiterplatten 140, sodass ein individuell anhand einer sekundären Lichtleiterplatte 140 beleuchtbares Teilsegment des Beleuchtungsmoduls sich genau über die Höhe eines einzelnen Ablagebereichs im Innenraum des Geräts erstreckt.

Auf diese Weise wird eine individuelle farbliche Beleuchtung einzelner Ablagebereiche im Geräteinnenraum ermöglicht.

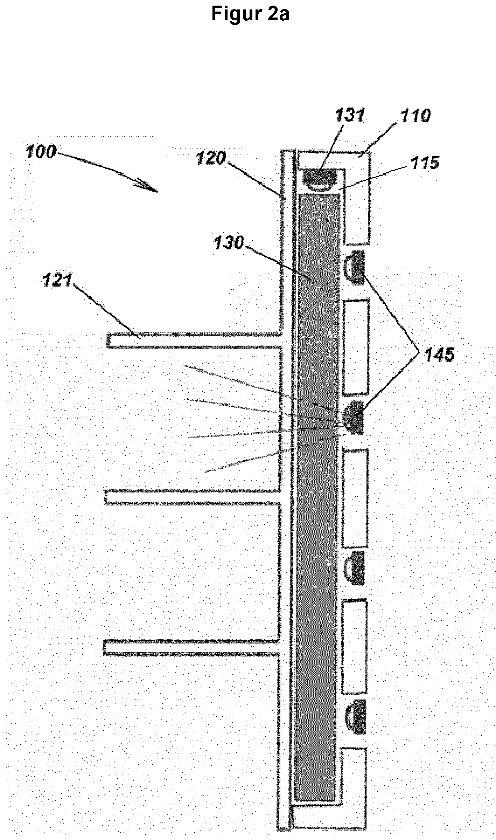

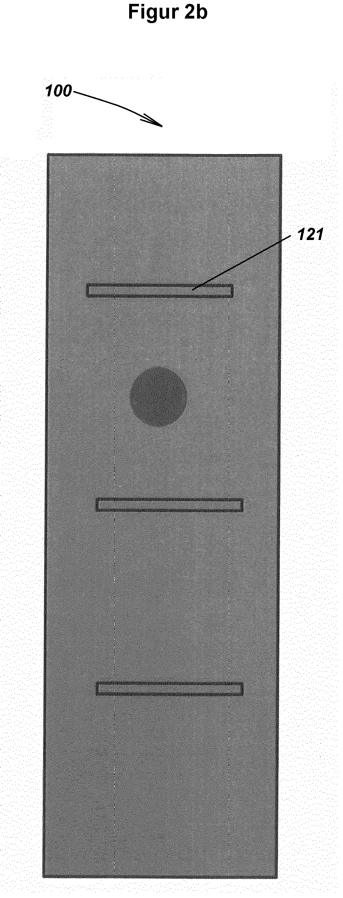

Figuren 2a-2b zeigen ein Beleuchtungsmodul 100 in einer zweiten Ausführungsform der Erfindung.

Es unterscheidet sich von dem in Figuren 1a-1b gezeigten Beleuchtungsmodul dadurch, dass hinter der primären Lichtleiterplatte 130 keine sekundären Lichtleiterplatten angeordnet sind. Stattdessen wird die Segmentbeleuchtung durch eine Mehrzahl an diskreten LED-Lichtquellen 145 gebildet, welche hinter der primären Lichtleiterplatte 130 angeordnet sind und diese direkt anstrahlen. Das von den diskreten LED-Lichtquellen 145 ausgesandte Licht durchdringt die primäre Lichtleiterplatte 130 an den jeweiligen Stellen und wird in den Innenraum abgegeben. Auf der Leuchtfläche des Beleuchtungsmoduls erscheint das von den diskreten LED-Lichtquellen 145 ausgesandte Licht als Lichtpunkt.

Auch die diskreten LED-Lichtquellen 145 können unabhängig von den primären LED-Lichtquellen 131 und auch unabhängig voneinander betrieben werden. Sie geben ebenso wie die sekundären LED-Lichtquellen der Ausführungsform gemäß Figuren 1a-1b farbiges Licht ab, sodass die Lichtpunkte farbig sind. In den Figuren 2a-2b ist pro Teilsegment des Beleuchtungsmoduls 100, entsprechend dem Bereich zwischen zwei Rippen 121, eine diskrete LED-Lichtquelle 145 dargestellt, es können aber auch mehrere diskrete LED-Lichtquellen 145 pro Teilsegment vorhanden sein.

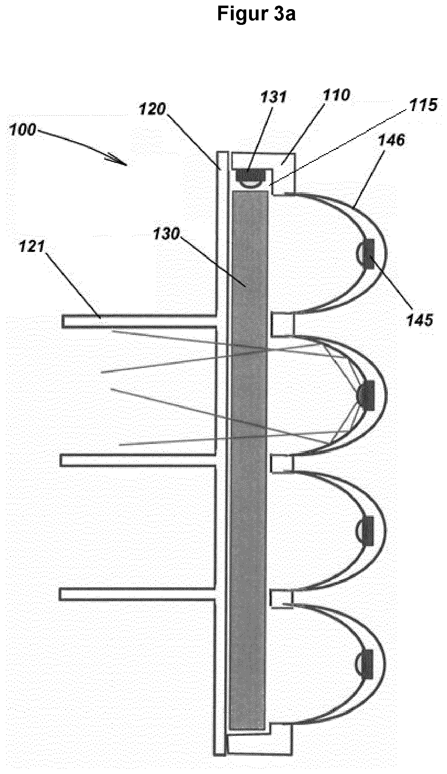

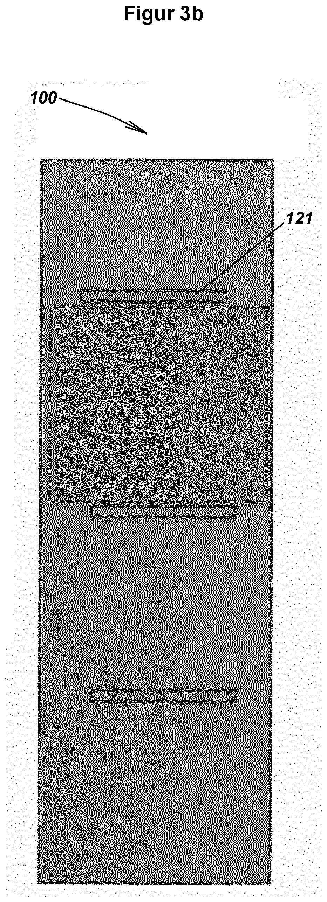

Figuren 3a-3b zeigen ein Beleuchtungsmodul 100 in einer dritten Ausführungsform der Erfindung.

Es unterscheidet sich von dem in Figuren 2a-2b gezeigten Beleuchtungsmodul dadurch, dass die diskreten LED-Lichtquellen 145 einen Reflektor 146 anstrahlen, der das ausgesandte Licht auf eine Fläche verteilt, die in etwa der Fläche eines Teilsegments, also in etwa der Fläche zwischen zwei Rippen 121 entspricht.

## Patentansprüche

1. Kühl- und/oder Gefriergerät mit einem wärmeisolierten Gerätekorpus, der einen Innenraum umschließt, mit einer Gerätetür, die eine Entnahmeöffnung reversibel verschließt, und mit einer Wärmepumpe zur Kühlung des Innenraums, wobei im Innenraum wenigstens ein Beleuchtungsmodul (100) angeordnet ist, das eine Lichtabgabefläche aufweist, die sich über zumindest einen Teil einer Wand des Innenraums erstreckt,
wobei das Beleuchtungsmodul (100) eine Segmentbeleuchtung (140, 141, 145) aufweist, die ausgebildet ist, wahlweise an einem oder mehreren Teilsegmente der Lichtabgabefläche vollflächig oder punktuell Licht in den Innenraum abzugeben,
dadurch gezeichnet, dass
das Beleuchtungsmodul (100) eine primäre Lichtleiterplatte (130) mit primären Lichtquellen (131) umfasst,
die sich über vorzugsweise die gesamte Lichtabgabefläche erstreckt, unabhängig von der Segmentbeleuchtung
(140, 141, 145) betrieben werden kann und ausgebildet ist, in einem aktiven Zustand vollflächig Licht in den Innenraum abzugeben.

2. Kühl- und/oder Gefriergerät nach Anspruch 1, **dadurch gekennzeichnet, dass** die Lichtabgabefläche eine längliche Gestalt aufweist und vorzugsweise hochkant an der Wand angeordnet ist.

3. Kühl- und/oder Gefriergerät nach Anspruch 2, **dadurch gekennzeichnet, dass** sich die Teilsegmente über die gesamte Tiefe der Lichtabgabefläche erstrecken und übereinander angeordnet sind.

4. Kühl- und/oder Gefriergerät nach Anspruch 1, **dadurch gekennzeichnet, dass** die Lichtabgabefläche quadratisch ist.

5. Kühl- und/oder Gefriergerät nach einem der vorhergehenden Ansprüche, **dadurch gekennzeichnet, dass** die Lichtabgabefläche sich über eine Seitenwand des Innenraums erstreckt.

6. Kühl- und/oder Gefriergerät nach einem der Ansprüche 1 bis 4, **dadurch gekennzeichnet, dass** die Lichtabgabefläche sich über die Rückwand des Innenraums erstreckt.

7. Kühl- und/oder Gefriergerät nach einem der vorhergehenden Ansprüche, **dadurch gekennzeichnet, dass** das Beleuchtungsmodul (100) eine die Lichtabgabefläche überdeckende Abdeckplatte (120) umfasst, die vorzugsweise eine Diffusorplatte (120) ist, und die vorzugsweise mehrere übereinander angeordnete, von dem Beleuchtungsmodul (100) abstehende horizontale Rippen (121) aufweist.

8. Kühl- und/oder Gefriergerät nach einem der vorhergehenden Ansprüche, **dadurch gekennzeichnet, dass** die Segmentbeleuchtung eine oder mehrere sekundäre Lichtleiterplatten (140) umfasst, die im Bereich der hinterleuchtbaren Teilsegmente hinter der primären Lichtleiterplatte (130) angeordnet sind und die ausgebildet sind, in einem aktiven Zustand vollflächig Licht in den Innenraum abzugeben.

9. Kühl- und/oder Gefriergerät nach Anspruch 8, **dadurch gekennzeichnet, dass** die sekundären Lichtleiterplatten (140) direkt aneinander angrenzen, wobei vorzugsweise vorgesehen ist, dass die einander zugewandten Kanten der sekundären Lichtleiterplatten (140) zumindest einseitig verspiegelt sind und/oder dass die sekundären Lichtleiterplatten (140) unterschiedliche Brechungsindices aufweisen.

10. Kühl- und/oder Gefriergerät nach einem der vorhergehenden Ansprüche, **dadurch gekennzeichnet, dass** die Segmentbeleuchtung eine oder mehrere diskrete Lichtquellen umfasst, die im Bereich des oder der hinterleuchtbaren Teilsegmente angeordnet sind.

11. Kühl- und/oder Gefriergerät nach einem der vorhergehenden Ansprüche, **dadurch gekennzeichnet, dass** die Segmentbeleuchtung ausgebildet ist, farbiges Licht abzugeben und/oder die Farbe des ausgesandten Lichts verändern zu können und/oder an jedem der Teilsegmente Licht unterschiedlicher Farbe abzugeben.

## Claims

1. Refrigeration and/or freezer device comprising a thermally insulated device body which encloses an interior space, comprising a device door which reversibly closes a removal opening, and comprising a heat pump for cooling the interior space, wherein at least one lighting module (100) is arranged in the interior space, which lighting module has a light-emitting surface which extends over at least part of a wall of the interior space,
wherein the lighting module (100) comprises segmented lighting (140, 141, 145) configured to selectively emit light into the interior space over the entire surface or punctually at one or more partial segments of the light-emitting surface,
**characterised in that**
the lighting module (100) comprises a primary light guide plate (130) with primary light sources (131), which preferably extends over the entire light-emitting surface, is operable independently of the segmented lighting (140, 141, 145) and is configured to emit light into the interior space over the entire surface in an active state.

2. Refrigeration and/or freezer device according to claim 1, **characterised in that** the light-emitting surface has an elongate shape and is preferably arranged on edge on the wall.

3. Refrigeration and/or freezer device according to claim 2, **characterised in that** the partial segments extend over the entire depth of the light-emitting surface and are arranged one above the other.

4. Refrigeration and/or freezer device according to claim 1, **characterised in that** the light-emitting surface is square.

5. Refrigeration and/or freezer device according to any one of the preceding claims, **characterised in that** the light-emitting surface extends over a side wall of the interior space.

6. Refrigeration and/or freezer device according to any one of claims 1 to 4, **characterised in that** the light-emitting surface extends over the rear wall of the interior space.

7. Refrigeration and/or freezer device according to any one of the preceding claims, **characterised in that** the lighting module (100) comprises a cover plate (120) covering the light-emitting surface, which is preferably a diffuser plate (120), and which preferably comprises a plurality of horizontal ribs (121) arranged one above the other and projecting from the lighting module (100).

8. Refrigeration and/or freezer device according to any one of the preceding claims, **characterised in that** the segmented lighting comprises one or more secondary light guide plates (140), which are arranged in the region of the partial segments which can be illuminated from behind behind the primary light guide plate (130) and which are configured to emit light into the interior space over the entire surface in an active state.

9. Refrigeration and/or freezer device according to claim 8, **characterized in that** the secondary light guide plates (140) are directly adjacent to one another, wherein it is preferably provided that the edges facing one another of the secondary light guide plates (140) are mirrored at least on one side and/or **in that** the secondary light guide plates (140) have different refractive indices.

10. Refrigeration and/or freezer device according to any one of the preceding claims, **characterised in that** the segmented lighting comprises one or more discrete light sources which are arranged in the region of the partial segment or segments which can be illuminated from behind.

11. Refrigeration and/or freezer device according to any one of the preceding claims, **characterised in that** the segmented lighting is configured to emit coloured light and/or to be able to modify the colour of the emitted light and/or to emit light of a different colour at each of the partial segments.

## Revendications

1. Appareil de réfrigération et/ou de congélation avec un corps d'appareil isolé thermiquement qui entoure un espace intérieur, avec une porte d'appareil qui ferme de manière réversible une ouverture de prélèvement, et avec une pompe à chaleur pour refroidir l'espace intérieur, au moins un module d'éclairage (100) étant agencé dans l'espace intérieur, lequel présente une surface d'émission de lumière qui s'étend sur au moins une partie d'une paroi de l'espace intérieur, le module d'éclairage (100) présentant un éclairage segmenté (140, 141, 145) qui est configuré pour émettre de la lumière dans l'espace intérieur sur toute la surface ou ponctuellement, au choix, au niveau d'un ou de plusieurs segments partiels de la surface d'émission de lumière,
**caractérisé en ce que**
le module d'éclairage (100) comprend une plaque de guide de lumière primaire (130) avec des sources de lumière primaires (131), qui s'étend de préférence sur l'ensemble de la surface d'émission de lumière, peut être exploitée indépendamment de l'éclairage segmenté (140, 141, 145) et est configurée pour émettre de la lumière sur toute la surface dans l'espace intérieur dans un état actif.

2. Appareil de réfrigération et/ou de congélation selon la revendication 1, **caractérisé en ce que** la surface d'émission de lumière présente une forme allongée et est de préférence agencée de chant sur la paroi.

3. Appareil de réfrigération et/ou de congélation selon la revendication 2, **caractérisé en ce que** les segments partiels s'étendent sur toute la profondeur de la surface d'émission de lumière et sont agencés les uns au-dessus des autres.

4. Appareil de réfrigération et/ou de congélation selon la revendication 1, **caractérisé en ce que** la surface d'émission de lumière est carrée.

5. Appareil de réfrigération et/ou de congélation selon l'une quelconque des revendications précédentes, **caractérisé en ce que** la surface d'émission de lumière s'étend sur une paroi latérale de l'espace intérieur.

6. Appareil de réfrigération et/ou de congélation selon l'une quelconque des revendications 1 à 4, **caractérisé en ce que** la surface d'émission de lumière s'étend sur la paroi arrière de l'espace intérieur.

7. Appareil de réfrigération et/ou de congélation selon l'une quelconque des revendications précédentes, **caractérisé en ce que** le module d'éclairage (100) comprend une plaque de recouvrement (120) recouvrant la surface d'émission de lumière, qui est de préférence une plaque de diffusion (120), et qui présente, de préférence, plusieurs nervures horizontales (121) agencées les unes au-dessus des autres, faisant saillie du module d'éclairage (100).

8. Appareil de réfrigération et/ou de congélation selon l'une quelconque des revendications précédentes, **caractérisé en ce que** l'éclairage segmenté comprend une ou plusieurs plaques de guide de lumière secondaires (140), qui sont agencées dans la zone des segments partiels pouvant être éclairés par l'arrière derrière la plaque de guide de lumière primaire (130) et qui sont configurées pour émettre de la lumière sur toute la surface dans l'espace intérieur dans un état actif.

9. Appareil de réfrigération et/ou de congélation selon la revendication 8, **caractérisé en ce que** les plaques de guide de lumière secondaires (140) sont directement adjacentes les unes aux autres, il étant de préférence prévu que les bords tournés les uns vers les autres des plaques de guide de lumière secondaires (140) sont réfléchissants au moins d'un côté et/ou **en ce que** les plaques de guide de lumière secondaires (140) présentent des indices de réfraction différents.

10. Appareil de réfrigération et/ou de congélation selon l'une quelconque des revendications précédentes, **caractérisé en ce que** l'éclairage segmenté comprend une ou plusieurs sources de lumière discrètes qui sont agencées dans la zone du ou des segments partiels pouvant être éclairés par l'arrière.

11. Appareil de réfrigération et/ou de congélation selon l'une quelconque des revendications précédentes, **caractérisé en ce que** l'éclairage segmenté est configuré pour émettre une lumière colorée et/ou pour pouvoir modifier la couleur de la lumière émise et/ou pour émettre une lumière de couleur différente au niveau de chacun des segments partiels.
